# EUROPÄISCHE PATENTSCHRIFT

(11) **EP 0 699 847 B1**
(45) Veröffentlichungstag und Bekanntmachung des Hinweises auf die Patenterteilung: **07.07.1999**
(21) Anmeldenummer: 95113160.6
(22) Anmeldetag: 22.08.1995
(51) Int. Cl.: F16F 15/124

(54) **Drehschwingungstilger, insbesondere für den Antriebsstrang von Kraftfahrzeugen**
Rotational vibration damper, particularly for the driveline of a motor vehicle
Amortisseur d'oscillations rotatives, en particulier pour le track d'entraînement d'un véhicule automobile

(30) Priorität: 24.08.1994 DE 4430036
(43) Veröffentlichungstag der Anmeldung: 06.03.1996
(73) Patentinhaber: SGF SÜDDEUTSCHE GELENKSCHEIBENFABRIK GMBH & CO. KG., 84478 Waldkraiburg (DE)
(72) Erfinder: Zimmermann, Dirk, D-84539 Ampfing (DE); Lutz, Peter, D-84472 Waldkraiburg (DE); Andrä, Rainer, Dr., D-65554 Limburg (DE)
(74) Vertreter: Goetz, Rupert, Dipl.-Ing.

(56) Entgegenhaltungen:
- EP-A- 0 266 479
- EP-A- 0 291 942
- DE-A- 4 240 510
- DE-C- 4 307 583

## Beschreibung

Die Erfindung betrifft einen Drehschwingungstilger nach dem Oberbegriff des Patentanspruchs 1.

Bei einem bekannten Drehschwingungstilger dieser Gattung (DE 43 07 583 C1, Fig. 6 bis 9) sind die Gleitkörper, in einer zur zentralen Achse parallelen Richtung betrachtet, brückenförmig gestaltet, mit zwei Brückenstützen und einem diese miteinander verbindenden Brückenbogen. Die beiden Brückenstützen sind in je einer der Halterungen im wesentlichen spielfrei gehalten. An der radial äußeren Seite des Brückenbogens ist eine Gleitfläche ausgebildet, die bei geringer Belastung nur mit ihrem mittleren Bereich an der radial inneren Mantelfläche des Schwungrings anliegt, während zwischen dieser Mantelfläche und den beiden Enden der Gleitfläche je ein radialer Zwischenraum freigelassen ist. Bei Belastung verformt sich der Brückenbogen derart, daß er mit seiner gesamten Gleitfläche an der inneren Mantelfläche der Schwungmasse anliegt. Auf diese Weise werden die Vorteile einer Abstützung mit hoher Radialsteifigkeit und diejenigen einer Abstützung mit geringer Radialsteifigkeit miteinander kombiniert. Dabei wird allerdings in Kauf genommen, daß die Gleitfläche sich in ihrem mittleren Bereich stärker abnützt als an ihren Enden.

Dies läßt sich zwar durch eine Gestaltung der Gleitkörper vermeiden (DE 43 07 583 C1, Fig. 3 und Fig. 10), bei der die an deren radial äußerer Seite ausgebildete Gleitfläche von vorneherein den gleichen Krümmungsradius wie die radial innere Mantelfläche des Schwungrings hat, so daß die Gleitfläche immer vollflächig an dieser Mantelfläche anliegt. Dabei wird eine gewünschte Nachgiebigkeit der radialen Abstützung der Schwungmasse über die Gleitkörper dadurch erzielt, daß radiale Zwischenräume zwischen je einer Fußfläche der Brückenstützen und der zugehörigen Halterung freigelassen sind, während andere Bereiche jedes Gleitkörpers von der zugehörigen Halterung schon bei geringer Belastung in radialer Richtung spielfrei abgestützt sind. In diesem Fall können die Gleitkörper, in einer zur zentralen Achse des Drehschwingungstilgers parallelen Richtung betrachtet, ebenfalls brückenförmig oder aber T- oder L-förmig gestaltet sein. Bei diesen Gestaltungen unterliegt die an der radial äußeren Seite jedes Gleitkörpers ausgebildete Gleitfläche zwar nur einem geringen Verschleiß. Es ist aber schwierig, die den Fußflächen der Gleitkörper radial gegenüberliegenden Bereiche der Halterungen so zu gestalten, daß sie einerseits bei hohen Belastungen die gewünschte Dämpfung ergeben und andererseits langlebig sind.

Der Erfindung liegt deshalb die Aufgabe zugrunde, einen Drehschwingungstilger der genannten Gattung derart weiterzubilden, daß sowohl die Gleitsteine wie die Halterungen auch bei den größten vorkommenden Belastungen eine noch höhere Lebensdauer erreichen.

Die Aufgabe ist gemäß der Erfindung mit den Merkmalen des Anspruchs 1 gelöst.

Die erfindungsgemäßen Gleitkörper liegen mit ihren beiden, voneinander abgewandten Stütz- bzw. Gleitflächen unmittelbar an der zugehörigen Mantelfläche des Tragkörpers bzw. des Schwungrings an. Die gewünschte Elastizität der Gleitkörper ergibt sich aus deren Füllung und nicht aus einer Gummischicht zwischen Gleitkörper und Tragkörper oder Schwungring. Infolgedessen ist die Gefahr ausgeschlossen, daß eine solche Gummischicht im Laufe der Zeit zerrieben werden könnte.

Vorteilhafte Ausgestaltungen der Erfindung ergeben sich aus den Unteransprüchen.

Ausführungsbeispiele der Erfindung werden im folgenden anhand schematischer Zeichnungen mit weiteren Einzelheiten erläutert. Es zeigen:
- Fig. 1: einen erfindungsgemäßen Drehschwingungstilger, in Richtung seiner Achse betrachtet,
- Fig. 2: den Teilschnitt II-II in Fig. 1, vergrößert,
- Fig. 3: den Teilschnitt III-III in Fig. 2,
- Fig. 4: die Draufsicht in Richtung des Pfeils IV in Fig. 3, und
- Fig. 5 bis 8: weitere Ausführungsformen der Erfindung in Teilschnitten entsprechend Fig. 3.

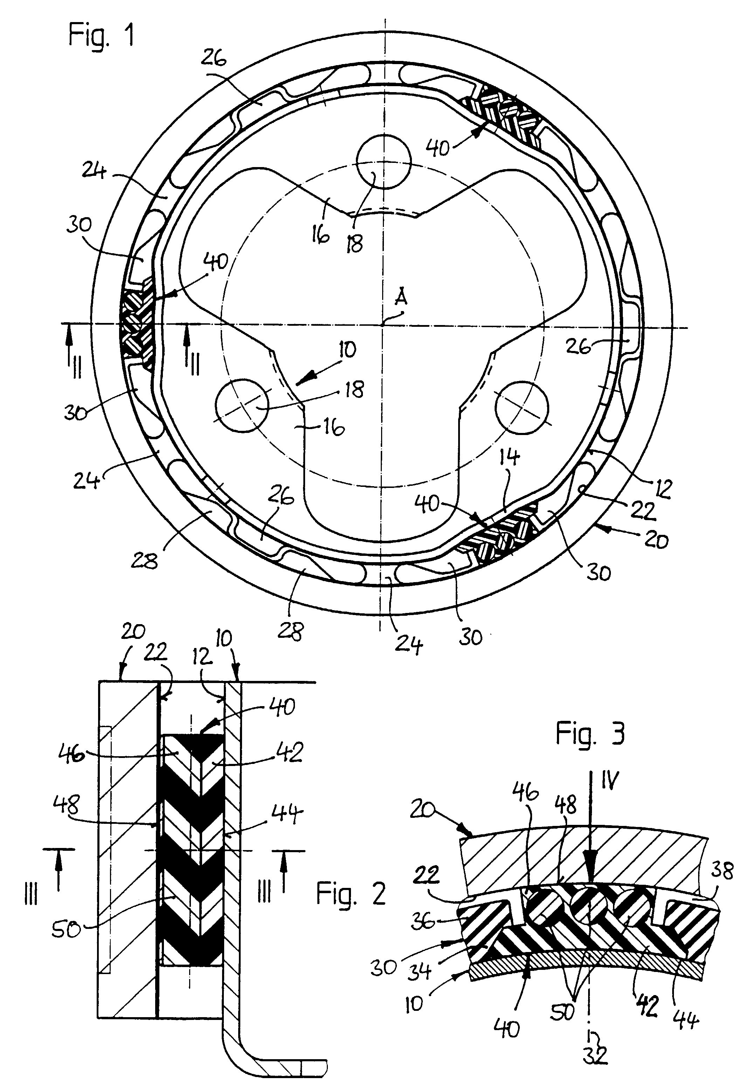

Der in Fig. 1 bis 4 dargestellte Drehschwingungstilger hat einen aus Stahlblech gepreßten Tragkörper 10 mit einer äußeren Mantelfläche 12, die drei bezüglich einer zentralen Achse A um 120° in Umfangsrichtung gegeneinander versetzte Einbuchtungen 14 aufweist und im übrigen kreiszylindrisch ist. Zum Tragkörper 10 gehören ferner drei radial nach innen ragende Flanschabschnitte 16 mit je einem Loch 18 zur Befestigung an einer Welle, deren Torsionsschwingungen gedämpft werden sollen. Rings um den Tragkörper 10 ist ein Schwungring 20 aus Stahl angeordnet, der eine kreiszylindrische innere Mantelfläche 22 aufweist und durch sechs elastische Segmente 24 mit dem Tragkörper 10 verbunden ist. Die Segmente 24 bestehen aus Gummi und sind an beiden Mantelflächen 12 und 22 anvulkanisiert. An die Mantelfläche 12 des Tragkörpers 10 sind ferner drei um 120° gegeneinander versetzte radiale Vorsprünge 26 aus Gummi anvulkanisiert, die gegenüber der Mantelfläche 22 des Schwungrings 20 radiales Spiel haben und mit Spiel in Umfangsrichtung zwischen je zwei an diese Mantelfläche 22 anvulkanisierten Anschlägen 28 aus Gummi angeordnet sind. Die radialen Vorsprünge 26 und Anschläge 28 begrenzen die Amplitude von Drehschwingungen, die der Schwungring 20 gegenüber dem Tragkörper 10 unter Verformung der Segmente 24 ausführen kann.

An eine der beiden Mantelflächen 12 und 22, im dargestellten Beispiel an die Mantelfläche 12 des Tragkörpers 10, sind ferner drei Paar ebenfalls aus Gummi bestehende Halterungen 30 anvulkanisiert, die paarweise symmetrisch in bezug auf eine in der Mitte zwischen je zwei radialen Vorsprüngen 26 angeordnete zentrale Achse A enthaltende Symmetrieebene 32 gestaltet sind; sie haben je einen Fußbereich 34 und einen gegenüber diesem in Umfangsrichtung vorspringenden Kopfbereich 36, so daß sie in einer zur zentralen Achse A parallelen Ansicht ein hakenförmiges Profil aufweisen und jedes Paar zusammengehöriger Halterungen 30 einen im Profil T-förmigen Zwischenraum begrenzt. Die Kopfteile 36 haben von der Mantelfläche 22 des Schwungsrings 20 einen radialen Abstand 38.

In den von jedem Paar Halterungen 30 gebildeten Zwischenraum ist ein Gleitkörper 40 aus einem hartelastischen Werkstoff mit guten Gleiteigenschaften, beispielsweise PTFE, angeordnet. Jeder der Gleitkörper 40 in sämtlichen dargestellten Ausführungsformen hat einen Fußteil 42, an dem eine zur Mantelfläche 12 des Tragkörpers 10 komplementäre radial innere Stützfläche 44 ausgebildet ist, sowie einen Kopfteil 46, an dem eine zur Mantelfläche 22 des Schwungrings 20 komplementäre radial äußere Gleitfläche 48 ausgebildet ist. Jedem Gleitkörper 40 ist ferner eine Füllung 50 aus gummielastischem Material zugeordnet, die beispielsweise aus Gummi, Schaumstoff oder dergleichen besteht.

In der Ausführungsform gemäß Fig. 1 bis 4 weist jeder Gleitkörper 40 drei zur zentralen Achse A parallele, kreiszylindrische Kanäle 52 auf, die von der Füllung 50 vollständig ausgefüllt sind. Die Querschnitte der Kanäle 52 sind so bemessen, daß das Fußteil 42 mit dem Kopfteil 46 des Gleitkörpers 40 eine Einheit bildet; die Füllung 50 ist somit für den Zusammenhalt von Kopf- und Fußteil nicht erforderlich, so daß es auch möglich ist, die Kanäle 52 nur teilweise mit der Füllung 50 zu füllen.

Bei dem in Fig. 5 dargestellten Gleitkörper 40 ist die Füllung 50 hingegen eine flache Platte aus gummielastischem Werkstoff, welche die einzige Verbindung zwischen Fußteil 42 und Kopfteil 46 darstellt. In diesem Fall ist es erforderlich, daß die Füllung 50 mit dem Fußteil 42 und dem Kopfteil 46 dauerhaft zusammenvulkanisiert oder -geklebt ist.

Bei dem in Fig. 6 dargestellten Gleitkörper 40 bilden der Fußteil 42 und der Kopfteil 46 hingegen wiederum eine Einheit. Dieser Gleitkörper hat zwei Kanäle 52, die sich parallel zur zentralen Achse A erstrecken, jedoch im Gegensatz zur Fig. 3 in je einer Umfangsrichtung offene Kanäle sind, in welche je eine benachbarte Halterung 30 mit ihrem Kopfbereich 36 eingreift. Dieser Gleitkörper 40 unterscheidet sich von den in den übrigen Zeichnungen dargestellten Gleitkörpern auch darin, daß seine Gleitfläche 48 gerade oder sogar leicht konkav ist, so daß eine bestimmte radiale Belastung erforderlich ist, um sie vollständig zum Anliegen an der Mantelfläche 22 zu bringen.

Der in Fig. 7 dargestellte Gleitstein 40 hat hingegen wiederum einen in Umfangsrichtung geschlossenen Kanal 52, der ein sich über nahezu die gesamte Breite des Gleitkörpers 40 erstreckendes bikonkaves Profil aufweist, so daß die in ihm enthaltene Füllung 50 aus gummielastischem Material an ihren Rändern breiter ist als in ihrem mittleren Bereich.

Die in Fig. 1 bis 7 dargestellten Gleitkörper 40 lassen sich je in einem Stück in den Zwischenraum zwischen den zugehörigen Halterungen 30 einschieben.

In Fig. 8 ist ein Gleitkörper 40 dargestellt, der mit dem in Fig. 5 dargestellten darin vergleichbar ist, daß das Fußteil 42 vom Kopfteil 46 getrennt ist. Gemäß Fig. 8 ist die zugehörige Füllung 50 jedoch in einem Stück mit den beiden benachbarten Halterungen 30 hergestellt. Die Fußteile 42 und Kopfteile 46 sämtlicher Gleitkörper 40 können entweder vor dem Einspritzen und Vulkanisieren der Halterungen 30 und Füllungen 50 in den Raum zwischen Tragkörper 10 und Schwungring 20 eingelegt oder nachträglich in axialer Richtung eingeschoben werden.

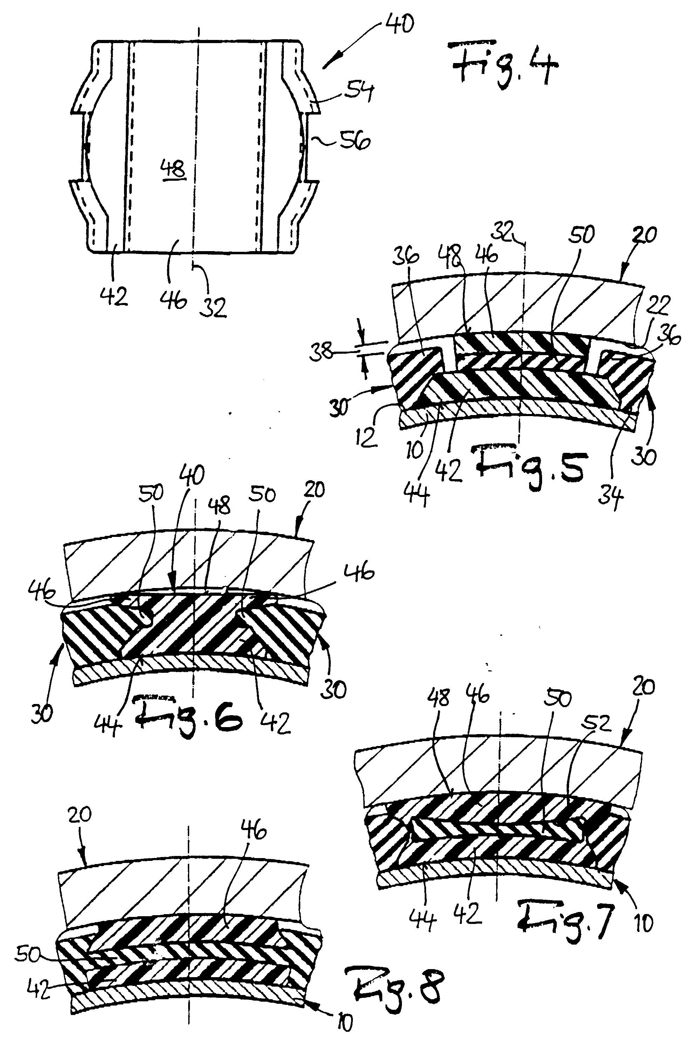

Jeder der dargestellten Gleitkörper 40 kann in Draufsicht im wesentlichen die aus Fig. 4 ersichtliche Form mit seitlichen Ausbuchtungen 54 und Einkerbungen 56 aufweisen, denen eine komplementäre Form der zugehörigen Halterungen 30 zugeordnet ist, so daß die Gleitkörper 40 bei der Montage zwischen den Halterungen 30 einrasten und dann gegen unbeabsichtigtes axiales Verschieben gesichert sind.

## Patentansprüche

1. Drehschwingungstilger, insbesondere für den Antriebsstrang von Kraftfahrzeugen mit
- einem Tragkörper (10), der rings um eine zentrale Achse (A) eine Mantelfläche (12) aufweist,
- einem Schwungring (20), der in radialem Abstand von der Mantelfläche (12) des Tragkörpers (10), gleichachsig mit diesem, eine Mantelfläche (22) aufweist,
- mehreren Segmenten (24) aus gummielastischem Material, die an den beiden Mantelflächen (12, 22) befestigt sind,
- mehreren Halterungen (30) aus gummielastischem Material, die an einer ersten der beiden Mantelflächen (12) befestigt sind, und
- mehreren Gleitkörpern (40), die in radialer Richtung in begrenztem Maße elastisch nachgiebig sind, durch die Halterungen (30) an der ersten Mantelfläche (12) befestigt sind und zur gleitenden Abstützung an der zweiten Mantelfläche (22) je eine Gleitfläche (48) aufweisen,
dadurch gekennzeichnet, daß
- die Gleitkörper (40) mit je einer an ihnen ausgebildeten Stützfläche (44) unmittelbar an der ersten Mantelfläche (12) abgestützt sind und
- zwischen dieser Stützfläche (44) und der zugehörigen Gleitfläche (48) eine Füllung (50) aus gummielastischem Material angeordnet ist.

2. Drehschwingungstilger nach Anspruch 1,
dadurch gekennzeichnet, daß
jeder Gleitkörper (40) mindestens einen zur zentralen Achse (A) parallelen Kanal (52) aufweist, der die Füllung (50) enthält.

3. Drehschwingungstilger nach Anspruch 1,
dadurch gekennzeichnet, daß
die Füllung (50) eine Zwischenschicht zwischen einem Fußteil (42) und einem Kopfteil (46) jedes Gleitkörpers (40) ist.

4. Drehschwingungstilger nach Anspruch 3,
dadurch gekennzeichnet, daß
die Füllung (50) den Kopfteil (46) vollständig vom Fußteil (42) trennt.

5. Drehschwingungstilger nach Anspruch 4,
dadurch gekennzeichnet, daß
die Füllung (50) zwei einander in Umfangsrichtung gegenüberstehende Halterungen (30) miteinander verbindet.

6. Drehschwingungstilger nach Anspruch 2,
dadurch gekennzeichnet, daß
jeder der Gleitkörper (40) zwei seitlich offene Kanäle (52) aufweist, in die als Füllung (50) je ein Vorsprung der benachbarten Halterungen (30) eingreift.

## Claims

1. A rotational vibration damper, especially for the driving train of motor vehicles,
comprising
- a supporting member (10) having a surface area (12) around a centre axis (A);
- a flyring (20) having a surface area (22) radially spaced from the surface area (12) of the supporting member (10) and coaxially with the same;
- a plurality of segments (24) of a rubber-elastic material that are fixed to the two surface areas (12, 22);
- a plurality of holding devices (30) of a rubber-elastic material that are fixed to a first one of the two surface areas (12), and
- a plurality of sliding members (40) that are elastically resilient to a limited extent in radial direction, are fixed to the first surface area (12) by way of the holding devices (30), and are provided with a sliding surface (48) each for slidingly bearing against the second surface area (22),
characterized in that
- the sliding members (40) bear directly against the first surface area (12) by means of one bearing surface (44) each formed on them, and
- a filling (50) of rubber-elastic material is arranged between said bearing surface (44) and the associated sliding surface (48).

2. The rotational vibration damper according to
claim 1, characterized in that
every sliding member (40) is provided with at least one passage (52) that is in parallel with the centre axis (A) and contains the filling (50).

3. The rotational vibration damper according to
claim 1, characterized in that
the filling (50) is a layer interposed between a foot portion (42) and a head portion (46) of every sliding member (40).

4. The rotational vibration damper according to
claim 3, characterized in that
the filling (50) separates the head portion (46) completely from the foot portion (42).

5. The rotational vibration damper according to
claim 4, characterized in that
the filling (50) connects two holding devices (30) which face each other in circumferential direction.

6. The rotational vibration damper according to
claim 2, characterized in that
each sliding body (40) is provided with two laterally open passages (52) into which engages a protrusion of the adjacent holding means (30) each as filler (50).

## Revendications

1. Amortisseur d'oscillations rotatives, en particulier pour la ligne de transmission de véhicules automobiles comprenant
- un corps de support (10) qui présente tout autour d'un axe central (A) une surface externe (12),
- une bague oscillante (20) qui présente à distance radiale de la surface externe (12) du corps de support (10), coaxiale avec celui-ci, une surface externe (22),
- plusieurs segments (24) en matériau élastique qui sont fixés aux deux surfaces externes,
- plusieurs moyens de maintien (30) en matériau élastique qui sont fixés à une première des deux surfaces externes (12), et
- plusieurs corps glissants (40) qui peuvent se déformer élastiquement dans une mesure limitée dans la direction radiale, sont fixés à la première surface externe (12) par les moyens de maintien (30) et présentent chacun une surface de glissement (48) pour l'appui glissant sur la deuxième surface externe (22),
caractérisé en ce que
- les corps glissants (40) s'appuient immédiatement sur la première surface externe (12) chacun par l'intermédiaire d'une surface d'appui formée sur lui et
- un remplissage (50) en matériau élastique est disposé entre cette surface d'appui (44) et la surface de glissement (48) associée.

2. Amortisseur d'oscillations rotatives selon la revendication 1,
caractérisé en ce que
chaque corps glissant (40) présente au moins un canal (52) parallèle à l'axe central (A), qui contient le remplissage (50).

3. Amortisseur d'oscillations rotatives selon la revendication 1,
caractérisé en ce que
le remplissage (50) est une couche intermédiaire entre une partie de pied (42) et une partie de tête (46) de chaque corps glissant (40).

4. Amortisseur d'oscillations rotatives selon la revendication 3,
caractérisé en ce que
le remplissage (50) sépare complètement la partie de tête (46) de la partie de pied (42).

5. Amortisseur d'oscillations rotatives selon la revendication 4,
caractérisé en ce que
le remplissage (50) relie entre eux deux moyens de maintien (30) vis-à-vis l'un de l'autre dans la direction périphérique.

6. Amortisseur d'oscillations rotatives selon la revendication 2,
caractérisé en ce que
chacun des corps glissants (40) présente deux canaux (52) ouverts latéralement dans lesquels pénètre une partie en saillie du moyen de maintien (30) voisin servant de remplissage (50).
